# EUROPÄISCHE PATENTANMELDUNG

(11) **EP 4 456 268 A2**
(43) Veröffentlichungstag der Anmeldung: **30.10.2024**
(21) Anmeldenummer: 24169346.4
(22) Anmeldetag: 09.04.2024
(51) Int. Cl.: H01M 50/103, H01M 50/15, H01M 50/166, H01M 50/528, H01M 50/533, H01M 50/536, H01M 50/54, H01M 50/557, H01M 50/566

(54) **BATTERIEZELLE SOWIE VERFAHREN ZUR FERTIGUNG EINER SOLCHEN BATTERIEZELLE**

(30) Priorität: 26.04.2023 DE 102023203846
(71) Anmelder: VOLKSWAGEN AG, 38440 Wolfsburg (DE)
(72) Erfinder: Yurtseven, Mesut, 38226 Salzgitter (DE)

(57) **Zusammenfassung**

Die Erfindung betrifft eine Batteriezelle mit einem Zellgehäuse, in dem ein Zellstack (1) angeordnet ist, wobei während eines Prozesses zur Fertigung der Batteriezelle ein Batteriezellen-Zwischenprodukt (21) gebildet ist, in dem der Zellstack (1) im Gehäuseinneren angeordnet ist und ein aus Ableiterfahnen (2) des Zellstacks (1) gebildetes Ableiterbündel (5) mit einem Kontaktelement (11) verlängert ist, das mit einem Zellterminal (7) der Batteriezelle elektrisch kontaktierbar ist, wobei ein Verbund (23) aus Ableiterfahnenbündel (5) und Kontaktelement (11), insbesondere quer zu einer Zellstack-Stapelrichtung (S), aus einer offenen Zellgehäuseöffnung (19) ragt, und wobei in einem Zusammenbauzustand der Verbund (23) aus Ableiterfahnenbündel (5) und Kontaktelement (11) in einem Biegevorgang in einen Montagespalt (24) zwischen Zellstack (1) und einem Wandelement (9), insbesondere Zellgehäuseboden, positioniert ist, das die Zellgehäuseöffnung (19) schließt. Erfindungsgemäß verbleibt im Biegevorgang das insbesondere biegestarr ausgebildete Kontaktelement (11) unverformt, das heißt ohne Biegung, während im Biegevorgang ausschließlich die insbesondere biegeweich ausgebildeten Ableiterfahnen (5) verformbar sind.

## Beschreibung

Die Erfindung betrifft eine Batteriezelle nach dem Oberbegriff des Anspruches 1 sowie ein Verfahren zur Fertigung einer solchen Batteriezelle nach dem Oberbegriff des Anspruches 10.

Eine prismatische Batteriezelle weist im Zellgehäuseinneren einen Zellstack, das heißt einen Elektroden-/Separator-Stapel auf, in dem Anoden und Kathoden unter Zwischenlage von Separatoren in einer Stapelrichtung abwechselnd übereinander angeordnet sind. Die Anoden sind mit anodenseitigen Ableiterfahnen seitlich aus dem Zellstack verlängert, während die Kathoden mit kathodenseitigen Ableiterfahnen seitlich aus dem Zellstack verlängert sind.

In einer gattungsgemäßen Batteriezelle sind die seitlich äußeren Enden der anodenseitigen Ableiterfahnen zu einem anodenseitigen Ableiterfahnenbündel kompaktiert, während die seitlich äußeren Enden der kathodenseitigen Ableiterfahnen zu einem kathodenseitigen Ableiterfahnenbündel kompaktiert sind. Die Anoden und Kathoden bestehen jeweils aus einer biegeweichen Substratfolie, die mit Aktivmaterial beschichtet ist. Die Ableiterfahne ist dabei materialeinheitlicher sowie einstückiger Bestandteil der Substratfolie.

Die seitlich aus dem Zellstack ragenden Ableiterfahnen weisen nur eine geringe Eigensteifigkeit auf. Dies führt dazu, dass die Ableiterfahnen ab einer bestimmten Baulänge im Fertigungsprozess schwierig handzuhaben sind. Die Ableiterfahnen sind daher mit einer ausreichend kurzen Baulänge zu bemessen; aufgrund der kurzen Baulänge ist das Ableiterfahnenbündel nicht direkt in elektrischem Kontakt mit dem Zellterminal, sondern ist das Ableiterfahnenbündel mit einem biegesteifen Kontaktelement beziehungsweise einem Tab verlängert, der mit einem korrespondierenden Zellterminal der Batteriezelle elektrisch kontaktierbar ist.

Während der Batteriezellen-Fertigung wird ein Batteriezellen-Zwischenprodukt gebildet, in dem der Verbund aus Ableiterfahnenbündel und Kontaktelement quer zu einer Zellstack-Stapelrichtung mit einem Überstand aus einer offenen Zellgehäuseöffnung nach außen abragt. Beim Zusammenbau der Batteriezelle erfolgt nunmehr ein Biegevorgang, bei dem der Verbund aus Ableiterfahnenbündel und Kontaktelement in einem gehäuseinneren Montagespalt zwischen Zellstack und einem Wandelement, insbesondere Zellgehäuseboden, positioniert wird. Im Stand der Technik erfolgt im Biegevorgang eine Z-Faltung, bei der Kontaktelement-Abschnitte um eine erste Biegestelle zusammengefaltet werden und zudem die biegeweicheren Ableiterfahnen um eine zweite Biegestelle verbogen werden. Aufgrund seiner vergleichsweise hohen Eigensteifigkeit können sich die Kontaktelement-Abschnitte während des Zusammenbaus gegebenenfalls nur unzureichend verbiegen oder diese federt elastisch zurück. In diesem Fall kann ein zellstacknaher Kontaktelement-Abschnitt die biegeweiche Zellstack-Seite beschädigen oder deformieren.

Aus der WO 2020/156951 A1 ist eine Batteriezelle bekannt, in der mehrere Elektroden einer ersten Polarität und mehrere Elektroden einer der ersten Polarität entgegengesetzten zweiten Polarität in einem Elektrodenstapel angeordnet sind. Die die Elektroden der ersten Polarität weisen jeweils eine erste Ableiterfahne auf, die auf einer ersten Seite des Elektrodenstapels aus dem Elektrodenstapel herausragt. Demgegenüber weisen die Elektroden der zweiten Polarität jeweils eine zweite Ableiterfahne auf, die auf einer der ersten gegenüberliegenden zweiten Seite des Elektrodenstapels aus dem Elektrodenstapel herausragt.

Die Aufgabe der Erfindung besteht darin, eine Batteriezelle sowie ein Verfahren zur Fertigung einer solchen Batteriezelle bereitzustellen, mit deren Hilfe ein im Vergleich zum Stand der Technik einwandfreier Zusammenbau der Batteriezelle durchführbar ist.

Die Aufgabe ist durch die Merkmale des Anspruches 1 oder 10 gelöst. Bevorzugte Weiterbildungen der Erfindung sind in den Unteransprüchen offenbart.

Die Erfindung geht von einer Batteriezelle mit einem Zellgehäuse aus, in dem ein Zellstack angeordnet ist. Während eines Prozesses zur Fertigung der Batteriezelle wird ein Batteriezellen-Zwischenprodukt gebildet, in dem der Zellstack im Gehäuseinneren angeordnet ist und ein aus Zellstack-Ableiterfahnen gebildetes Ableiterbündel mit einem Kontaktelement verlängert ist. Das Kontaktelement ist mit einem Zellterminal der Batteriezelle elektrisch kontaktierbar. Im Batteriezellen-Zwischenprodukt ragt der Verbund aus Ableiterfahnenbündel und Kontaktelement quer zu einer Zellstack-Stapelrichtung mit einem Überstand aus einer offenen Zellgehäuseöffnung ab. Im weiteren Fertigungsprozess folgt ein Zusammenbau der Batteriezelle, bei dem der Verbund aus Ableiterfahnenbündel und Kontaktelement in einem Biegevorgang in einen Montagespalt zwischen Zellstack und einem Wandelement positioniert wird, das die Zellgehäuseöffnung schließt. Gemäß dem kennzeichnenden Teil des Anspruches 1 verbleibt beim im Biegevorgang das insbesondere biegestarr ausgebildete Kontaktelement unverformt, das heißt ohne Biegung. Demgegenüber werden im Biegevorgang ausschließlich die insbesondere biegeweich ausgebildeten Ableiterfahnen verformt. Da erfindungsgemäß somit nur die Ableiterfahnen gebogen werden, nicht aber die biegesteiferen Kontaktelemente, kann eine Beschädigung beziehungsweise Deformation die biegeweichen Zellstack-Seite unterbunden werden. Eine solche Deformation der Zellstack-Seite würde sich dagegen einstellen, wenn beim Biegevorgang zusätzlich auch das biegesteifere Kontaktelement durch Biegung zu verformen ist. In diesem Fall kann bei unzureichender Biegung des Kontaktelements eine Störkontur gebildet werden, mittels der die biegeweiche Zellstack-Seite deformierbar ist.

Im Batteriezellen-Zwischenprodukt kann das Kontaktelement an einem Zellterminal angebunden sein, der Bestandteil des Wandelements ist. Die Anbindung kann beispielsweise stoffschlüssig, etwa durch ein Ultraschallschweißen oder durch Klebung erfolgen.

In einer technischen Umsetzung kann das Kontaktelement zweiteilig ausgeführt sein, und zwar aus einem Basisblechteil und einem davon separaten Zusatzblechteil. Das Basisblechteil kann unmittelbar am Zellterminal angebunden sein. Zudem kann das Basisblechteil zusammen mit dem Zusatzblechteil eine Schweißstelle, insbesondere Ultraschweißstelle, bilden, in der das Ableiterfahnenbündel zwischen dem Zusatzblechteil und dem Basisblechteil verschweißt ist. Durch Nutzung des Zusatzblechteils wird das Ultraschweißwerkzeug nicht unmittelbar in Kontakt mit dem Ableiterfahnenbündel gebracht. Vielmehr erfolgt die Druckbeaufschlagung unter Zwischenlage des Zusatzblechteils, so dass eine Beschädigung des Ableiterfahnenbündels unterbunden werden kann.

Die Ableiterfahnen ragen seitlich vom Zellstack ab. Zudem sind im Batteriezellen-Zwischenprodukt die seitlich äußeren Ableiterfahnen-Enden in einem Vorfixierschritt zu den Ableiterfahnenbündel kompaktierbar, in dem die Ableiterfahnen-Enden in Stapelrichtung spaltfrei beziehungsweise ohne Lufteinschlüsse übereinander gestapelt sind.

Die Ableiterfahnen können in einem Bereich zwischen dem Zellstack und dem Ableiterfahnenbündel eine Biegeachse beziehungsweise Biegestelle aufweisen, um die das Ableiterfahnenbündel im Biegevorgang in den Montagespalt einklappbar ist. Die Biegeachse beziehungsweise Biegestelle ist insbesondere am Übergang zum Ableiterfahnenbündel in den Ableiterfahnen definiert.

Erfindungsgemäß erfolgt im Biegevorgang eine U-Faltung erfolgt, bei der das Kontaktelement um die Biegeachse/Biegestelle umgeschlagen wird, und zwar unter Biegung der biegeweichen Ableiterfahnen um die Biegeachse, wodurch Verbund aus Kontaktelement und Ableiterfahnenbündel im gehäuseinneren Montagespalt positionierbar ist.

Um einen störkonturfreien, einfachen Zusammenbau zu ermöglichen, ist es bevorzugt, wenn im Batteriezellen-Zwischenprodukt das am Zellterminal angebundene Kontaktelement querschnittskleiner bemessen ist als das Wandelement. In diesem Fall kann das Kontaktelement um ein Versatzmaß innerhalb eines Wandelement-Umfangsrands ausgebildet sein, der im Zusammenbauzustand auf einem Öffnungsrand der Zellgehäuseöffnung positioniert ist. Bei einer solchen Kontaktelement-Geometrie kann das Kontaktelement während des Zusammenbaus störkonturfrei sowie verformungsfrei (biegefrei) im gehäuseinneren Montagespalt positioniert werden.

Nachfolgend ist ein Ausführungsbeispiel der Erfindung anhand der beigefügten Figuren beschrieben. Es zeigen:
- Figuren 1 bis 4: jeweils Ansichten, anhand derer eine erfindungsgemäße Batteriezelle veranschaulicht ist; und
- Figuren 5 bis 8: jeweils Ansichten, anhand derer eine Batteriezelle gemäß einem nicht von der Erfindung umfassten Vergleichsbeispiel veranschaulicht ist.

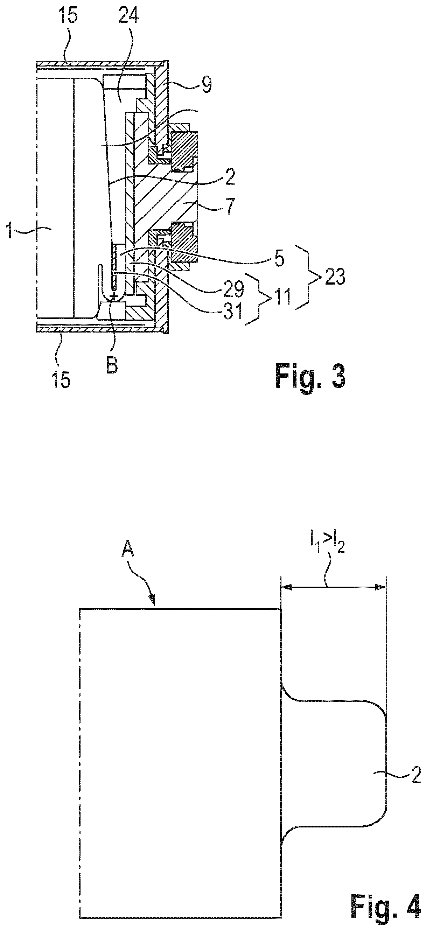

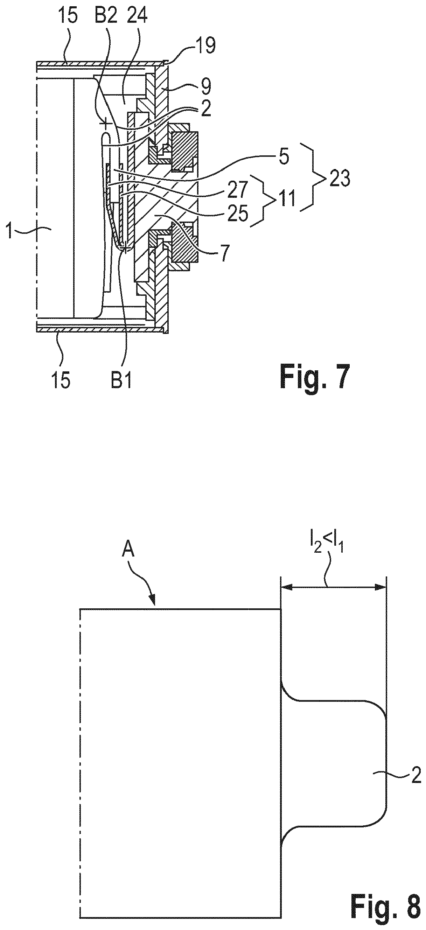

Im Hinblick auf ein einfacheres Verständnis der Erfindung wird zunächst Bezug auf die Figuren 4 bis 8 genommen, die ein nicht von der Erfindung umfasstes Vergleichsbeispiel zeigen. In der Figur 7 ist in teilweiser Schnittansicht eine prismatische Batteriezelle im Zusammenbauzustand gezeigt. Die Batteriezelle weist im Zellgehäuseinneren einen Zellstack 1, das heißt einen Elektroden-/Separator-Stapel, auf, in dem Anoden und Kathoden unter Zwischenlage von Separatorblättern in einer Stapelrichtung S abwechselnd übereinander angeordnet sind. In der Figur 8 ist exemplarisch eine Anode A angedeutet. Diese ist aus einer biegeweichen Substratfolie gebildet, die mit Aktivmaterial beschichtet ist. Die Substratfolie ist seitlich nach außen mit einer unbeschichteten Ableiterfahne 2 verlängert. Die nicht näher gezeigten Kathoden sind in gleicher Weise aufgebaut. In sämtlichen Figuren sind von der Vielzahl von Ableiterfahnen 2 stets nur die beiden äußeren Ableiterfahnen 2 gezeigt.

In der Figur 7 ist eine Zellstack-Seite gezeigt, von der sämtliche anodenseitigen Ableiterfahnen 2 seitlich aus dem Zellstack 1 abragen. Die seitlich äußeren Ableiterfahnen-Enden sind zu einem anodenseitigen Ableiterfahnenbündel 5 kompaktiert. Das Ableiterfahnenbündel 5 ist nicht unmittelbar mit einem Zellterminal 7, der in einem Gehäuseboden 9 des Zellgehäuses ausgebildet ist, in elektrischem Kontakt. Vielmehr ist das Ableiterfahnenbündel 5 mit einem biegesteiferen Kontaktelement 11 verlängert, das am Zellterminal 7 angebunden ist. Auf diese Weise können die Ableiterfahnen 2 der biegeweichen Anoden A mit einer reduzierten Baulänge I₂ (Figur 8) ausgebildet sein, wodurch die Handhabung der Ableiterfahnen 2 während der Batterie-Fertigung vereinfacht ist.

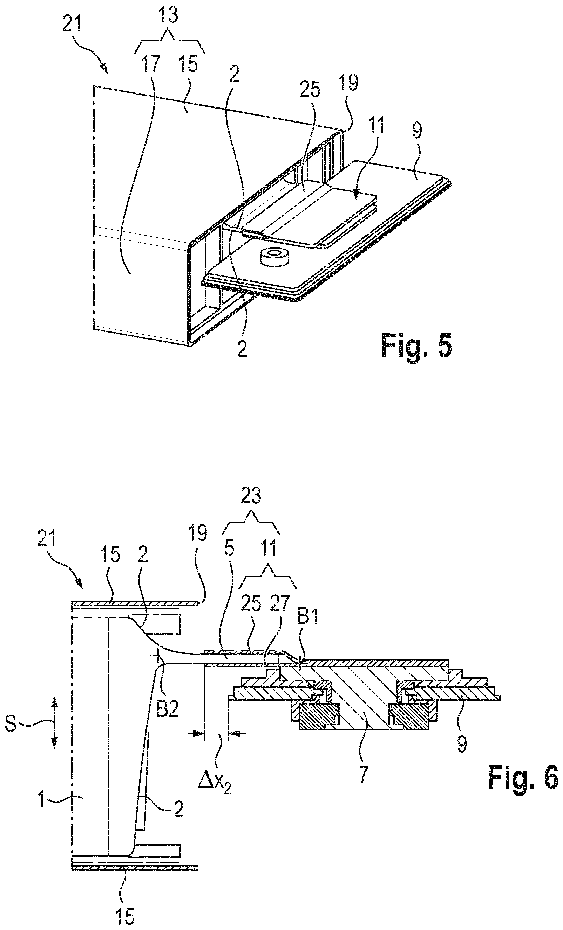

In den Figuren 5, 6 oder 7 weist das Zellgehäuse neben dem Gehäuseboden 9 einen quaderförmigen Gehäusekorpus 13 auf. Dieser besteht aus zwei gegenüberliegenden Flachseitenwänden 15, die über Schmalseitenwände 17 miteinander verbunden sind. Die Wände 15, 17 begrenzen jeweils gegenüberliegende Zellgehäuseöffnungen 19, von denen in den Figuren 5 bis 7 nur eine Zellgehäuseöffnungen 19 dargestellt ist. Die nicht dargestellte Zellgehäuseöffnung 19 ist im Zusammenbauzustand von einer nicht gezeigten Deckelbaugruppe geschlossen, die aus einem Gehäusedeckel, einem Zellterminal und daran elektrisch kontaktiertem Zellstack 1 besteht. Auf der in den Figuren 5, 6 und 7 dargestellten gegenüberliegenden Seite ist das Zellgehäuseinnere im Zusammenbauzustand (Figur 7) durch den Gehäuseboden 9 geschlossen.

In den Figuren 5 und 6 ist die Batteriezelle zu einem Prozesszeitpunkt vor dem Zusammenbauzustand als ein Batteriezellen-Zwischenprodukt 21 gezeigt. Demzufolge ist die (nicht dargestellte) Deckelbaugruppe bereits in den Gehäusekorpus 13 eingesetzt, während der Gehäuseboden 9 noch nicht abschließend am Gehäusekorpus 13 montiert ist. Vielmehr ragt ein Verbund 23 aus Ableiterfahnenbündel 5 und Kontaktelement 11 mit einem Überstand aus der noch offenen Zellgehäuseöffnung 19 nach außen ab. Das Kontaktelement 11 ist in den Figuren 5 bis 7 als ein zweilagiges Blechteil realisiert. Deren Blechlagen 25, 27 sind an der, dem Zellstack 1 zugewandten Seite aufgebogen, wobei das Ableiterfahnenbündel 5 zwischen den beiden Blechlagen 25, 27 des Kontaktelements 11 positioniert ist. Die beiden Blechlagen 25, 27 sowie das zwischengeordnete Ableiterfahnenbündel 5 sind mittels Ultraschweißung stoffschlüssig zusammengefügt.

Ausgehend von dem in den Figuren 5 und 6 angedeuteten Prozesszeitpunkt wird der Gehäuseboden 9 in einem Fügeschritt auf den Öffnungsrandbereich der Zellgehäuseöffnung 19 positioniert. Im Fügeschritt wird der Verbund 23 aus Ableiterfahnenbündel 5 und Kontaktelement 11 in Z-Faltung um die Biegestellen B1, B2 (Figuren 6 oder 7) gefaltet. Die erste Biegestelle B1 unterteilt das Kontaktelement 11 in einen zellstacknahen Kontaktelement-Abschnitt und einen zellstackfernen Kontaktelement-Abschnitt. Wie aus der Figur 6 weiter hervorgeht, überragen im Batteriezellen-Zwischenprodukt 21 die Blechlagen 25, 27 des Kontaktelements 11 den Umfangsrand des Gehäusebodens 9 mit einem Übermaß Δx₂. Auf diese Weise kann die Baulänge I₂ der Ableiterfahnen 2 verkürzt werden. Um jedoch einen störkonturfreien Zusammenbau zu gewährleisten, müssen die beiden Kontaktelement-Abschnitte um die Biegestelle B1 übereinander geklappt werden.

Die zweite Biegestelle B2 ist im Bereich der Ableiterfahnen 2 zwischen dem Zellstack 1 und dem Ableiterfahnenbündel 5 (direkt am Übergang zum Ableiterfahnenbündel 5) vorgesehen. Bei der Z-Faltung wird zunächst der zellstackferne Kontaktelement-Abschnitt im Gegenuhrzeigersinn um erste Biegestelle B1 gegenüber dem zellstacknahen Kontaktelement-Abschnitt bogen. Zudem wird der Verbund 23 aus Ableiterfahnenbündel 5 und Kontaktelement 11 im Uhrzeigersinn um die zweite Biegestelle B2 gebogen, wodurch der Verbund 23 in einen gehäuseinneren Montagespalt 24 zwischen dem Zellstack 1 und dem Gehäuseboden 9 einsetzbar ist. Aufgrund ihrer vergleichsweise hohen Eigensteifigkeit können die Kontaktelement-Abschnitte während des Biegevorgangs gegebenenfalls nur unzureichend um die erste Biegestelle B1 verbogen werden oder federn diese um die erste Biegestelle B1 geringfügig elastisch zurück. In diesem Fall besteht die Problematik, dass der zellstacknahe Kontaktelement-Abschnitt die biegeweiche Zellstack-Seite beschädigt oder deformiert.

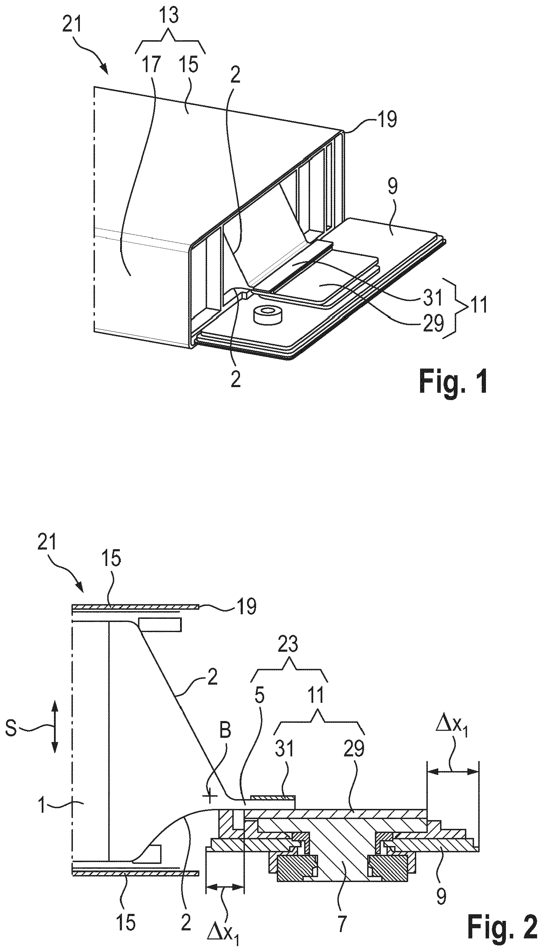

Nachfolgend ist anhand der Figuren 1 bis 4 eine erfindungsgemäße Maßnahme beschrieben, mittels der eine solche Beschädigung beziehungsweise Deformation der biegeweichen Zellstack-Seite während des Zusammenbaus vermieden werden kann. Der grundsätzliche Aufbau sowie die Funktionsweise der in den Figuren 1 bis 4 gezeigten Komponenten ist weitgehend identisch mit dem Aufbau sowie der Funktionsweise der in den Figuren 4 bis 8 beschriebenen Komponenten. Von daher wird bei den Figuren 1 bis 4 auf die Vorbeschreibung der Figuren 5 bis 8 verwiesen.

Im Unterschied zum Vergleichsbeispiel verbleibt erfindungsgemäß beim Biegevorgang das Kontaktelement 11 unverformt, das heißt ohne Biegung, während im Biegevorgang ausschließlich die biegeweich ausgebildeten Ableiterfahnen 2 verformt (das heißt umgebogen) werden. Um eine Verbiegung des Kontaktelements 11 zu vermeiden, ist in dem Batteriezellen-Zwischenprodukt 21 der Figuren 1 und 2 das am Zellterminal 7 angebundene Kontaktelement 11 - im Unterschied zum Stand der Technik - querschnittskleiner bemessen als der Gehäuseboden 9. Das Kontaktelement 11 ist daher um ein Versatzmaß Δx₁ (Figur 2) gegenüber dem Umfangsrand des Gehäusebodens 9 zurückgesetzt. Auf diese Weise kann die Biegestelle B1 (Vergleichsbeispiel, Figur 6) weggelassen werden, die erforderlich ist, um das querschnittsgroße Kontaktelement 11 für einen störkonturfreien Zusammenbau zusammenzufalten.

Im Gegenzug ist im Ausführungsbeispiel der Figuren 1 bis 4 die Bauteillänge I₁ der Ableiterfahnen 2 - im Vergleich zur Figur 8 - nur geringfügig erhöht, so dass sich noch keine schwierigere Handhabung der Ableiterfahnen 2 während des Fertigungsprozesses ergibt.

Erfindungsgemäß ist daher lediglich im Bereich der Ableiterfahnen 2 zwischen dem Zellstack 1 und dem Ableiterfahnenbündel 5 (d.h. am Übergang zum Ableiterfahnenbündel 5) genau eine Biegeachse bzw. Biegestelle B definiert, um die der Verbund 23 aus Ableiterfahnenbündel 5 und Kontaktelement 11 in den gehäuseinneren Montagespalt 24 einklappen kann. Beim Zusammenbau erfolgt daher keine Z-Faltung (wie im Vergleichsbeispiel), sondern eine U-Faltung, bei der das Kontaktelement 11 um die Biegeachse B umgeschlagen wird. Das Umschlagen erfolgt alleine unter Verformung/Verbiegung der biegeweichen Ableiterfahnen 5, wodurch der Verbund 23 im Montagespalt 25 positioniert wird, und zwar ohne zusätzliche Verbiegung des Kontaktelements 11.

Wie aus den Figuren 1 bis 3 weiter hervorgeht, ist das Kontaktelement 11 zweiteilig realisiert, nämlich aus einem Basisblechteil 29 und einem Zusatzblechteil 31. Das Basisblechteil 29 ist am Zellterminal 7 angebunden. Das Zusatzblechteil 31 ist unter Zwischenlage des Ableiterfahnenbündels 5 am Basisblechteil 29 mittels Ultraschallschweißen stoffschlüssig verbunden.

### Bezugszeichenliste

- 1: Zellstack
- 2: Ableiterfahnen
- 3: Ableiterfahnen-Ende
- 5: Ableiterfahnenbündel
- 7: Zellterminal
- 9: Wandelement beziehungsweise Gehäuseboden
- 11: Kontaktelement
- 13: Gehäusekorpus
- 15: Flachseitenwand
- 17: Schmalseitenwand
- 19: Zellgehäuseöffnung
- 21: Batteriezellen-Zwischenprodukt
- 23: Verbund
- 24: Montagespalt
- 25, 27: Blechlagen
- 29: Basisblechteil
- 31: Zusatzblechteil
- A: Anode
- B1, B2, B: Biegestellen
- Δx₁: Versatzmaß
- Δx₂: Übermaß
- I₁, I₂: Baulänge

## Patentansprüche

1. Batteriezelle mit einem Zellgehäuse, in dem ein Zellstack (1) angeordnet ist, wobei während eines Prozesses zur Fertigung der Batteriezelle ein Batteriezellen-Zwischenprodukt (21) gebildet ist, in dem der Zellstack (1) im Gehäuseinneren angeordnet ist und ein aus Ableiterfahnen (2) des Zellstacks (1) gebildetes Ableiterbündel (5) mit einem Kontaktelement (11) verlängert ist, das mit einem Zellterminal (7) der Batteriezelle elektrisch kontaktierbar ist, wobei ein Verbund (23) aus Ableiterfahnenbündel (5) und Kontaktelement (11), insbesondere quer zu einer Zellstack-Stapelrichtung (S), aus einer offenen Zellgehäuseöffnung (19) ragt, und wobei in einem Zusammenbauzustand der Verbund (23) aus Ableiterfahnenbündel (5) und Kontaktelement (11) in einem Biegevorgang in einen Montagespalt (24) zwischen Zellstack (1) und einem Wandelement (9), insbesondere Zellgehäuseboden, positioniert ist, das die Zellgehäuseöffnung (19) schließt, **dadurch gekennzeichnet, dass** im Biegevorgang das insbesondere biegestarr ausgebildete Kontaktelement (11) unverformt, das heißt ohne Biegung, verbleibt, und dass im Biegevorgang ausschließlich die insbesondere biegeweich ausgebildeten Ableiterfahnen (5) verformbar sind.

2. Batteriezelle nach Anspruch 1, **dadurch gekennzeichnet, dass** das Kontaktelement (11) an den Zellterminal (7) angebunden ist, der Bestandteil des Wandelements (9) ist.

3. Batteriezelle nach Anspruch 1 oder 2, **dadurch gekennzeichnet, dass** das Kontaktelement (11) zweiteilig aus einem Basisblechteil (29) und einem davon separaten Zusatzblechteil (31) aufgebaut ist, und dass insbesondere das Basisblechteil (29) am Zellterminal (7) angebunden ist.

4. Batteriezelle nach Anspruch 3, **dadurch gekennzeichnet, dass** das Basisblechteil (29) zusammen mit dem Zusatzblechteil (31) eine Schweißstelle, insbesondere Ultraschweißstelle, bildet, in der das Ableiterfahnenbündel (5) zwischen dem Zusatzblechteil (31) und dem Basisblechteil (29) verschweißt ist.

5. Batteriezelle nach einem der vorhergehenden Ansprüche, **dadurch gekennzeichnet, dass** die Ableiterfahnen (5) seitlich vom Zellstack (1) abragen, und/oder dass die seitlich äußeren Ableiterfahnen-Enden in einem Vorfixierschritt zu dem Ableiterfahnenbündel (5) kompaktierbar sind, in dem die Ableiterfahnen-Enden spaltfrei übereinander gestapelt sind.

6. Batteriezelle nach einem der vorhergehenden Ansprüche, **dadurch gekennzeichnet, dass** die Ableiterfahnen (5) in einem Bereich zwischen dem Zellstack (1) und dem Ableiterfahnenbündel (5), insbesondere am Übergang zum Ableiterfahnenbündel (5), eine Biegeachse beziehungsweise Biegestelle (B) definieren, um die das Ableiterfahnenbündel (5) im Biegevorgang in den Montagespalt (24) einklappbar ist.

7. Batteriezelle nach einem der vorhergehenden Ansprüche, **dadurch gekennzeichnet, dass** im Biegevorgang eine U-Faltung erfolgt, bei der insbesondere das Kontaktelement (11) um die Biegeachse/Biegestelle (B) umschlagbar ist, und/oder dass das Kontaktelement (11) unter Verformung/Verbiegung der biegeweichen Ableiterfahnen (5) im Montagespalt (24) positionierbar ist.

8. Batteriezelle nach einem der vorhergehenden Ansprüche, **dadurch gekennzeichnet, dass** im Batteriezellen-Zwischenprodukt (21) das am Zellterminal (7) angebundene Kontaktelement (11) querschnittskleiner als das Wandelement (9) ausgebildet ist.

9. Batteriezelle nach Anspruch 8, **dadurch gekennzeichnet, dass** im Batteriezellen-Zwischenprodukt (21) das Kontaktelement (11) um ein Versatzmaß (Δx₁) innerhalb eines Wandelement-Umfangsrands ausgebildet ist, der im Zusammenbauzustand auf einem Öffnungsrand der Zellgehäuseöffnung (19) liegt, so dass bevorzugt beim Zusammenbau das Kontaktelement (11) störkonturfrei sowie verformungsfrei im gehäuseinneren Montagespalt (24) positionierbar ist.

10. Verfahren zur Fertigung einer Batteriezelle nach einem der vorhergehenden Ansprüche, die ein Zellgehäuse aufweist, in dem ein Zellstack (1) angeordnet ist, wobei während des Verfahrens zur Fertigung der Batteriezelle ein Batteriezellen-Zwischenprodukt (21) gebildet wird, in dem der Zellstack (1) im Gehäuseinneren angeordnet ist und ein aus Ableiterfahnen (2) des Zellstacks (1) gebildetes Ableiterbündel (5) mit einem Kontaktelement (11) verlängert ist, das mit einem Zellterminal (7) der Batteriezelle elektrisch kontaktier wird, wobei ein Verbund (23) aus Ableiterfahnenbündel (5) und Kontaktelement (11), insbesondere quer zu einer Zellstack-Stapelrichtung (S), aus einer offenen Zellgehäuseöffnung (19) ragt, und wobei in einem Zusammenbau der Verbund (23) aus Ableiterfahnenbündel (5) und Kontaktelement (11) in einem Biegevorgang in einen Montagespalt (24) zwischen Zellstack (1) und einem Wandelement (9), insbesondere Zellgehäuseboden, positioniert wird, das die Zellgehäuseöffnung (19) schließt, **dadurch gekennzeichnet, dass** im Biegevorgang das insbesondere biegestarr ausgebildete Kontaktelement (11) unverformt, das heißt ohne Biegung, verbleibt, und dass im Biegevorgang ausschließlich die insbesondere biegeweich ausgebildeten Ableiterfahnen (5) verformt wird.
